Europäisches Patentamt

European Patent Office

Office européen des brevets

(11) Publication number : **0 473 531 A2**

## (12) EUROPEAN PATENT APPLICATION

(21) Application number : **91610065.4**

(22) Date of filing : **16.08.91**

(51) Int. Cl.$^5$ : **C09D 167/06,** C09D 5/00

(30) Priority : **16.08.90 DK 1951/90**

(43) Date of publication of application :
**04.03.92 Bulletin 92/10**

(84) Designated Contracting States :
**BE CH DE DK ES FR GB IT LI NL SE**

(71) Applicant : **Jakobsen, Keld**
**Segenvej 21**
**DK-3700 Roenne (DK)**

(72) Inventor : **Jakobsen, Keld**
**Segenvej 21**
**DK-3700 Roenne (DK)**

(74) Representative : **Skoett-Jensen, Knud**
**c/o Patentingenioer K. Skoett-Jensen**
**Lemmingvej 225**
**DK-8361 Hasselager (DK)**

(54) **Wear-proof paint.**

(57)   A wear-proof paint to be used at locations where the paint is exposed to wear, such as at roofs, facades and floors, but also to be used on surfaces which are exposed to wear as through influence from fluids, such as in or at swimming pools, liquid-manure tanks, in or at more or less solid substances containing liquid manure tanks, at chinked floors and at floors and walls in washrooms, is described. A paint is provided which on a surface to be protected is applied in form of a first cover of paint to which cover the paint consists of 1/3 through 2/3 concrete polyester resin, of between 5 and 20 % tixotropy providing means and the rest of the paint being pigmenting substance to which paint before, to be preferred just before, the application of this first cover of paint between 1/2 and 5 % catalyst is added, after which first cover a second cover of paint is added to which cover the paint consists of 1/3 through 2/3 concrete polyester resin, of between 2 and 10 % wax solution and the rest of the paint being pigmenting substance to which paint before, to be preferred just before, the application of this second cover of paint between 1/2 and 5 % catalyst is added.

EP 0 473 531 A2

The present invention relates to a wear-proof paint to be used at locations where the paint is exposed to wear, such as at roofs, facades and floors, but also to be used on surfaces which are exposed to wear as through influence from fluids, such as in or at swimming pools, liquid-manure tanks, in or at more or less solid substances containing liquid manure tanks, at chinked floors and at floors and walls in washrooms.

To these purposes today generally paints are used which at the manufacturing of them are based on water, oil, different types of tares and chalk to be regarded as being the chiefly fluid element comprised in the paint.

To achieve a paint possessing wearing qualities, and which is able to be manufactured without being very costly, according to the invention a paint is provided which on a surface to be protected is applied in form of a first cover of paint to which cover the paint consists of 1/3 through 2/3 concrete polyester resin, of between 5 and 20 % tixotropy providing means and the rest of the paint being pigmenting substance to which paint before, to be preferred just before, the application of this first cover of paint between 1/2 and 5 % catalyst is added, after which first cover a second cover of paint is added to which cover the paint consists of 1/3 through 2/3 concrete polyester resin, of between 2 and 10 % wax solution and the rest of the paint being pigmenting substance to which paint before, to be preferred just before, the application of this second cover of paint between 1/2 and 5 % catalyst is added.

The contents of wax solution in the paint of the second cover of paint influence upon the gloss of the paint after the curing. An in practice well functioning composition of the paint for the two covers of paint comprises for each of them between 40 and 50 % concrete polyester and a practically corresponding amount of pigmenting substance.

If the paint has to be applied at temperatures below +15 °C it may be advantageous if between 1 and 2 % cobalt is added to the paint.

As concrete polyester resin has also to be understood non-water-soluble polyester resin.

### Example 1:

An as exemplifying embodiment of such a paint can be a paint where the first cover of paint consists of substances as follows and has a curing time of 15 through 20 minutes:

a. 18 through 22 kg concrete or marble polyester resin, type 280 E being marketed by the firm Neste Polyester International, 3, Place Gustave Eiffel, Silic, F-94588 Rungis Cedex, France, this polyester resin is more detailed specified in addendum A,

b. to which is added a quantity of the size of 1.6 through 2.0 kg pigmenting paste, such as pigmenting paste Fernagel type 611 being marketed by the firm Ferro Danmark A/S, Industrivej 10, DK-3540 Lynge, Denmark, for more details see addendum B,

c. 18 through 22 kg gelcoat, such as gelcoat type Norpol NGA being marketed by the firm Jotun Polymer A/S, Postbox 2061, N-3201, Sandefjord, Norway, this gelcoat is more detailed specified in addendum C,

d. 180 through 200 g wax solution, such as wax solution type No-Stick which is a styreen containing solution being marketed by the above mentioned firm Jotun Polymer A/S, for more details see addendum D,

e. acetone/styreen is added in a quantity which depends on the application of the paint is to be made manually or by spraying, and whereby the paint of the second cover of paint consists of elements as follows and has a curing time of 15 through 20 minutes and has a gloss of 5 through 10:

1. the same as a. mentioned above,
2. the same as b. mentioned above,
3. the same as c. mentioned above,
4. 900 through 1100 g wax solution as d. mentioned above,
5. acetone/styreen in a quantity which depends on the application of the paint is to be made manually or by spraying.

### Example 2:

Another example providing practically the same properties is achieved by using a paint at which a. and thereby also 1. mentioned above are substituted with a corresponding quantity of concrete or marble polyester resin, such as a polyester resin being marketed designated 36 - 60 - Jotun as manufactured by the above mentioned firm Jotun Polymer A/S, this polyester resin is more detailed specified in addendum E.

ADDENDUM A through E

A. The mentioned polyester resin is of the type of unsaturated polyester resins and is orthophthalic based and is pre-accelerated to attain a low development of heat during curing and has a low styreen content.

Further values are given in the common table below.

B. A water weather resisting pigmenting paste containing a pigmenting substance and a styreen free polyester resin. Further values see the common table below.

C. A gelcoat based on isophthalic acid/neopenthyl glycol-polyester resin. Further values see common table below.

D. A styreen containing paraffine solution in fluid condition having a boiling temperature of abt. 145 °C and having a freezing temperature of abt. -30 °C.

E. The mentioned polyester resin is non-tixotropic and is based on orthophthalic acid and is pre-accelerated and has a low styreen content.

```
Further values are given in the common table:

Substance                              A      B      C      E
Uncured substance:
Cure time minutes                      15     16     18     13
Acid figure mgKOH/g max                35                   30
Viscosity
    (Brookfield) PAs                    1     18     17      7
Styreen contents %                     30                   31

Cured substance:
Temp of deformation °C                 60     70     93     54
Bending strength MPa                   85    110           130
E-modul at tensioning GPa             3.5    2.5    3.7    3.3
Elong.strength MPa                     50     42     80     65
Elong.at break %                      1.5      8      5      6
```

Low ability to absorb water, absorbs less than abt. 1 %.

Catalysts can for instance be MEK-peroxide or cyclohexanon-peroxide in a quantity of 1 through 4 %.

The informations given above are based on the data published by the firms manufacturing the different substances.

## Claims

1. A wear-proof paint to be used at locations where the paint is exposed to wear, such as at roofs, facades and floors, but also to be used on surfaces which are exposed to wear as through influence from fluids, such as in or at swimming pools, liquid-manure tanks, in or at more or less solid substances containing liquid manure tanks, at chinked floors and at floors and walls in washrooms, wherein a paint is provided which on a surface to be protected is applied in form of a first cover of paint to which cover the paint consists of 1/3 through 2/3 concrete polyester resin, of between 5 and 20 % tixotropy providing means and the rest of the paint being pigmenting substance to which paint before, to be preferred just before, the application of this first cover of paint between 1/2 and 5 % catalyst is added, after which first cover a second cover of paint is added to which cover the paint consists of 1/3 through 2/3 concrete polyester resin, of between 2 and 10 % wax solution and the rest of the paint being pigmenting substance to which paint before, to be preferred just before, the application of this second cover of paint between 1/2 and 5 % catalyst is added.

2. A paint according to claim 1 wherein for the application of the paint at temperatures below +15 °C to the paints for the first and the second cover between 1 and 2 % cobalt is added.

3. A paint according to claim 1 or 2 wherein as concrete polyester resin has to be understood non-water-soluble polyester resin.